(19) Europäisches Patentamt
European Patent Office
Office européen des brevets

(11) **EP 1 596 510 B1**

(12) **EUROPÄISCHE PATENTSCHRIFT**

(45) Veröffentlichungstag und Bekanntmachung des Hinweises auf die Patenterteilung:
**04.04.2007 Patentblatt 2007/14**

(51) Int Cl.:
*H04B 10/08* (2006.01)     *H04B 10/158* (2006.01)
*G01J 1/42* (2006.01)     *G01N 21/00* (2006.01)

(21) Anmeldenummer: **04011136.1**

(22) Anmeldetag: **11.05.2004**

(54) **Photodetektoranordnung und Verfahren zum Abgleich derselben**

Photodetector arrangement and method of adjustment

Agencement de photodétecteur et procédé d'ajustage

(84) Benannte Vertragsstaaten:
**DE**

(43) Veröffentlichungstag der Anmeldung:
**16.11.2005 Patentblatt 2005/46**

(73) Patentinhaber: **Acterna Germany GmbH**
**72800 Eningen (DE)**

(72) Erfinder: **Treiber, Ulrich**
**72764 Reutlingen (DE)**

(74) Vertreter: **Klocke, Peter**
**ABACUS Patentanwälte,**
**Klocke Späth Barth,**
**Kappelstrasse 8**
**72160 Horb (DE)**

(56) Entgegenhaltungen:
**US-A- 4 332 469        US-A- 4 494 241**
**US-A- 5 969 809        US-A1- 2002 153 475**
**US-B2- 6 700 654**

EP 1 596 510 B1

## Beschreibung

Die vorliegende Erfindung betrifft eine Photodetektoranordnung zum Messen von optischen Leistungen mit einem opto-elektrischen Wandler zur Aufnahme eines optischen Signals und Ausgeben eines elektrischen Signals, einen Verstärker zum Verstärken des von dem opto-elektrischen Wandlers empfangenen Signals und Erzeugen eines elektrischen Spannungssignals, einem A/D-Wandler nach dem Verstärker, eine Signalverarbeitungseinrichtung mit einer Speichereinrichtung, die die digitalen Signale des A/D-Wandlers empfängt und weiterverarbeitet, sowie einen Temperatursensor in Verbindung mit der Signalverarbeitungseinrichtung. Die Erfindung betrifft außerdem ein Verfahren zum Abgleichen einer derartigen Photodetektoranordnung in Abhängigkeit von Umweltparametern, insbesondere Temperatur, während des Messbetriebs.

Eine vorstehend beschriebene Schaltungsanordnung ist aus der US 6 700 654 B2 bekannt. Eine derartige Anordnung wird beispielsweise zur Zustandüberwachung eines optischen Übertragungskanals verwendet, um eine optische Leistungsmessung mittels eines Pegelmessers oder auch mittels eines Spektrumanalysators durchzuführen. Das optische Signal wird dabei mittels eines opto-elektrischen Wandlers, beispielsweise Photodiode oder Phototransistor, erfasst, verstärkt und entsprechend digital ausgewertet. Diese opto-elektrischen Wandler bereiten jedoch Schwierigkeiten beim Messen der optischen Intensität, da diese opto-elektrischen Wandler als lichtempfindliche elektrische Geräte mit einer Halbleiterdiode versehen sind, die negativ vorgespannt ist. Infolgedessen fließt selbst bei Abwesenheit von Licht eine sehr kleiner Strom, der als Dunkelstrom bezeichnet wird. Sobald Licht auf die Photodiode auftrifft, wird ein Strom erzeugt, der durch einen entsprechenden nachgeschalteten elektronischen Schaltkreis detektiert wird. Dieses Signal umfasst jedoch den Photostrom infolge des einfallenden Lichtes und den Dunkelstrom, der unabhängig von dem Datensignal ist. Da der Photostrom als Messstrom benutzt wird, stellt der Dunkelstrom ein Störsignal dar, das die Genauigkeit der Messung beeinflusst. Der Dunkelstrom ist besonders deshalb schlecht zu kompensieren, weil er stark von der Temperatur der Photodiode und des Verstärkers abhängt. Unter anderem wird auch aus diesem Grunde die Photodiode in manchen Einrichtungen bei einer konstanten Temperatur betrieben. Die Temperatur kann jedoch nur in einem begrenzten Maß geregelt werden. Die Temperaturschwankungen begrenzen damit die Empfindlichkeit des Systems.

Gemäß der US 6 700 654 B2 wird unter anderem auch vorgeschlagen, zusätzlich ein bekanntes Signal zu dem zu detektierenden Signal durch die Photodiode zu schicken und anschließend den erfassten Wert zu extrahieren, um die Photodiode oder andere elektrische Schaltkreise zu charakterisieren. Dieses System enthält außerdem einen Temperatursensor und Speichereinrichtungen um Systemantwortwerte bei bestimmten Temperaturen zu speichern und nach Messung der Temperatur mittels der gespeicherten Systemantwortwerten den Systemantwortwert entsprechend der gemessenen Temperatur zu korrigieren.

Ein weiteres System ist aus US 2002/0153475 bekannt.

Der vorliegenden Erfindung liegt die Aufgabe zugrunde, die Genauigkeit bei der Messung von Photoströmung insbesondere bei niedrigen Pegeln und sich ändernden Umweltbedingungen, insbesondere Temperaturänderungen zu verbessern.

Diese Aufgabe wird erfindungsgemäß durch eine Photodetektoranordnung mit den Merkmalen des Hauptanspruchs sowie durch ein Verfahren zum Abgleichen einer derartigen Photodetektoranordnung gelöst. Weitere vorteilhafte Ausgestaltungen sind den jeweiligen rückbezogenen Unteransprüchen zu entnehmen.

Die erfindungsgemäße Photodetektoranordnung weist eine Schalteinrichtung zwischen photoelektrischen Wandler und dem Verstärker auf, mit der es möglich ist vorzugsweise mittels elektronischen Schaltern, den opto-elektrischen Wandler durch eine Ersatzlast oder durch einen Leerlaufanschluss zu ersetzen. Aus Messungen mit und ohne Ersatzlast und der Temperatur kann dadurch der Schaltungsoffset errechnet werden. Dazu wird der Innenwiderstand des opto-elektrischen Wandlers benötigt. Dieser muss beim Grundabgleich bei Raumtemperatur für die Photodetektoranordnung einmal ermittelt und in dem Speicher abgespeichert werden. Der aktuelle Innenwiderstand bei der dann jeweils anliegenden Temperatur kann aus dem bekannten physikalischen Verhalten des opto-elektrischen Wandlers, beispielsweise einer Photodiode, bestimmt werden. Der ermittelte Offset wird vom Messergebnis abgezogen, so dass dies dadurch in Abhängigkeit von der Temperatur korrigiert wird und somit genauer ist.

Gemäß dem erfindungsgemäßen Verfahren erfolgt der Abgleich der Photodetektoranordnung derart, dass das Verstärkerausgangsspannungssignal bei Leerlauf und beim Anschluss des Hilfswiderstandes gemessen wird. Danach erfolgt die Berechnung der Ausgangsspannung am Verstärker, die dem Dunkelstrom entspricht, unter Berücksichtigung der Widerstandswerte des optoeiektrischen Wandlers, die in einem Speicher abgelegt sind und der augenblicklichen Temperatur entsprechen, mittels der Signalverarbeitungseinrichtung. Der ermittelte Spannungspegel des opto-elektrischen Wandlers bei Messbetrieb wird mit dem dem Dunkelstrom entsprechenden Spannungssignal am Verstärkerausgang bei der augenblicklichen Temperatur korrigiert. Dieser Abgleichvorgang kann während des eigentlichen Messvorgangs durch kurzzeitiges elektronisches Umschalten des Schalters auf die Leerlaufstellung und den Hilfswiderstand durchgeführt werden. Es kann damit in ermittelbaren Zeitabständen eine Temperaturanpassung des Dunkelstroms und Korrektur der Messung durchgeführt werden.

Die Ermittlung des Innenwiderstandes des opto-elektrischen Wandlers bei der Fertigerstellung der Anordnung beim Grundabgleich erfolgt bei einer bestimmten Temperatur ohne Photodetektion, das heißt, der Strom durch den opto-elektrischen Wandler ist gleich null. Nacheinander wird das Spannungssignal am Verstärkerausgang im Leerlauf, mit opto-elektronischem Wandler und nur mit Hilfswiderstand gemessen und aus den Messergebnissen der Innenwiderstand des opto-elektrischen Wandlers berechnet.

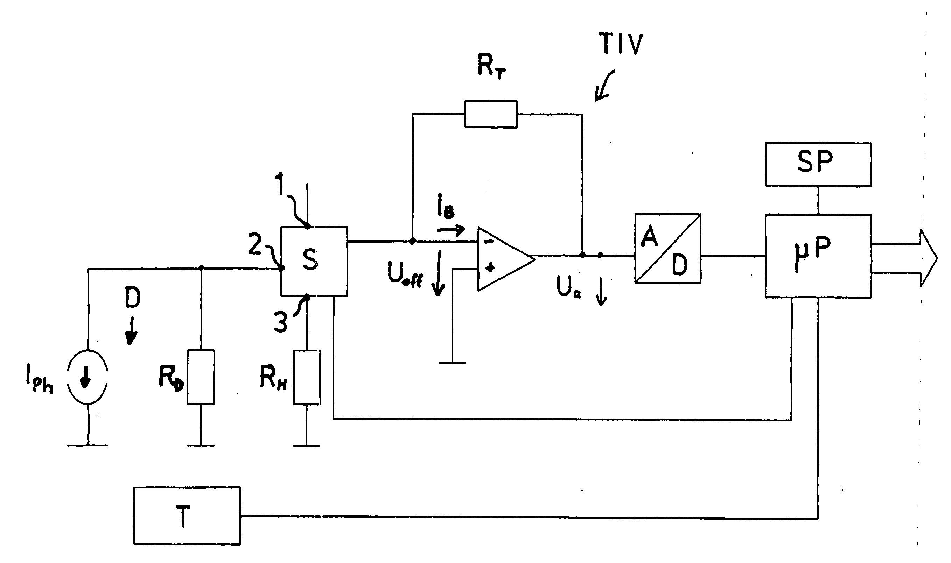

Anhand der einzigen Figur wird nachfolgend die Erfindung am Beispiel einer Photodiode näher erläutert.

Der typische Aufbau einer Detektoranordnung ist in der Figur dargestellt und zeigt das Ersatz-Schaltbild für eine Photodiode D mit einer Stromquelle, die den konstanten Strom $I_{Ph}$ erzeugt und zu der parallel der Innenwiderstand $R_D$ der Photodiode D geschaltet ist. Die Photodiode ist üblicherweise an einen Transimpedanzverstärker TIV angeschlossen, der gemäß der Figur mit dem Widerstand $R_T$ beschaltet ist und einen Biasstrom $I_B$ und eine Offsetspannung $U_{off}$ am Eingang aufweist. Das Ausgangsspannungssignal $U_a$ wird mittels des A/D-Wandlers AD digitalisiert und einer Signalverarbeitungseinrichtung µP zugeführt. Diese ist mit einer Speichereinrichtung S und einem Temperatursensor T verbunden, der die Temperatur entweder an der Photodiode oder die Umgebungstemperatur an der gesamten Photodetektoranordnung misst. Zwischen den Transimpedanzverstärkern TIV und der Photodiode D befindet sich gemäß der Erfindung ein elektronischer Schalter S, der über die Signalverarbeitungseinrichtung µP geschaltet werden kann. Der Schalter erlaubt den Anschluss des Tranksimpedanzverstärkers TIV an eine Leerlaufklemme 1, an eine Klemme 2 für die Photodiode D und eine Klemme 3 an einen Hilfswiderstand $R_H$.

Unter Vernachlässigung des Biasstromes $I_B$ und der Offsetspannung $U_{off}$ gilt $U_a = I_{ph} \cdot R_T$, wobei der Photodiodenstrom $I_{ph}$ proportional der optischen Leistung ist. Bei kleinen Photoströmen (< -100 pA) müssen der Biasstrom $I_B$ und die Offsetspannung $U_{off}$ berücksichtigt werden.

Damit während der tatsächlichen Messung eine exakte Messung möglich ist, muss bei der Photodetektoranordnung der Widerstand $R_{D23}$ bei Raumtemperatur bestimmt und abgespeichert werden. Dies erfolgt auf einfache Weise mittels der erfindungsgemäßen Photodetektoranordnung, in dem bei einem Photodiodenstrom $I_{ph} = 0$ der Schalter S in alle drei Stellungen gebracht und die jeweilige Ausgangsspannung am Transimpedanzverstärker TIV gemessen wird. Dabei ergeben sich folgende drei Gleichungen, wobei die Indizes den Schalterstellungen entsprechen:

$$(1)\ U_{ao1} = I_B \cdot R_T + U_{off}$$

$$(2)\ U_{ao2} = I_B \cdot R_T + U_{off}\,(1 + R_T / R_D)$$

$$(3)\ U_{ao3} = I_B \cdot R_T + U_{off}\,(1 + R_T / R_H).$$

Aus diesen drei Gleichungen mit drei Unbekannten ($R_D$, $I_B$, $U_{off}$) kann der Widerstand der Diode $R_{D23}$ bei Raumtemperatur bestimmt werden.

Im Messbetrieb bei einer beliebigen Temperatur δ gilt dann:

$$(4)\ U_a = I_{Ph} \cdot R_T + U_{ao\delta}.$$

mit

$$(5)\ U_{ao\delta} = I_{B\delta} \cdot R_T + U_{off\delta}\,(1 + R_T / R_{D\delta}).$$

Die Dunkelstromspannung bei einer beliebigen Temperatur Ua0δ wird während der Messung ermittelt und von dem eigentlichen Messergebnis abgezogen, so dass dann ein temperaturabhängiges genaues Messergebnis vorliegt. Dies erfolgt derart, dass während der Messung der Schalter S kurz von der normalen Messstellung 2 auf die Leerlaufstellung 1 geschaltet wird und damit die Spannung

$$(6) \; U_{ao\delta 1} = I_{B\delta} \bullet R_{\delta} + U_{off\delta}$$

gemessen wird. Entsprechend wird kurz der Schalter S auf die Stellung 3 umgeschaltet und dabei die Spannung

$$(7) \; U_{a0\delta 3} = I_{B\delta} \bullet R_{\delta} + U_{off\delta} (1 + R_T / R_H)$$

gemessen. Aus diesen zwei Gleichungen kann der Biasstrom $I_{B\delta}$ und die Offsetspannung $U_{off\delta}$ bei der tatsächlichen Temperatur $\delta$ bestimmt werden.

Da aus der Literatur das Verhalten von Photodioden über der Temperatur bekannt ist, kann dies abhängig vom jeweiligen Photodiodentyp zusätzlich zu dem ermittelten Widerstandswert $R_{D23}$ bei Raumtemperatur abgespeichert werden. Hierbei gilt

bei InGaAs:          $R_{D\delta} = R_{D23} \bullet 10^{-A}$ und
bei Germanium:    $R_{D\delta} = R_{D23} \bullet 10^{-B}$, mit $A = (\delta-23)/45$ und $B = (\delta-23)/20$.

Die Temperatur $\delta$ wird von dem Temperatursensor T gemessen, so dass mittels der Signalverarbeitungseinrichtung und der im Speicher SP abgespeicherten Daten für das Verhalten der Photodioden und dem Diodenwiderstand $R_{D23}$ beim Raumtemperatur die Dunkelstromausgangsspannung $U_{a0\delta}$ bei der augenblicklichen Temperatur $R_{D\delta}$ über die Gleichung (5) errechnet werden kann. Dieser Wert ist dann von der Signalverarbeitungseinrichtung $\mu P$ von dem gemessenen Spannungssignal abzuziehen.

Das Umschalten des Schalters S, Messen der Spannungen $U_{a0\delta 1}$ und $U_{a0\delta 3}$ und der Temperatur $\delta$ kann während des Messens, für den Benutzer unbemerkt in einer Zeit < 0,5 Sekunden geschehen. Der Vorgang erfolgt damit im Hintergrund für den Benutzer und erhöht die Messgenauigkeit mit relativ einfachen Mitteln ganz erheblich. Da auch die Feuchtigkeit und die elektromagnetische Verträglichkeit (EMV) der jeweiligen Photodetektoranordnung abhängig von dem Aufbau und dem Einsatzgebiet den Dunkelstrom des opto-elektrischen Wandlers beeinflussen, können somit gegenüber der einmaligen Kalibrierung vor in Betriebnahme geänderte Umweltbedingungen berücksichtigt werden.

**Patentansprüche**

1. Photodetektoranordnung zum Messen von optischen Leistungen mit

   einem opto-elektrischen Wandler (D) zur Aufnahme eines optischen Signals und Ausgeben eines elektrischen Signals ,
   einem Verstärker (TIV) zum Verstärken des von dem opto-elektrischen Wandler (D) empfangenen Signals und Erzeugung eines elektrischen Spannungssignals,
   einem A/D-Wandler (AD) nach dem Verstärker (TIV), einer Signalverarbeitungseinrichtung ($\mu P$) mit einer Speichereinrichtung (SP) die die digitalen Signale des A/D-Wandlers empfängt und weiterverarbeitet, sowie
   einen Temperatursensor (T) in Verbindung mit der Signalverarbeitungseinrichtung ($\mu P$),
   **gekennzeichnet durch**
   eine Schalteinrichtung (S) zwischen opto-elektrischem Wandler (D) und Verstärker (TIV) zum Umschalten des Verstärkers (TIV) entweder auf einen Hilfswiderstand ($R_H$), den opto-elektrischen Wandler (D) oder auf einen Leerlaufanschluss (1).

2. Photodetektoranordnung nach Anspruch 1, **dadurch gekennzeichnet, dass** die Schalteinrichtung (S) eine elektronische Schaltereinrichtung ist, die mit der Signalverarbeitungseinrichtung ($\mu P$) verbunden ist.

3. Verfahren zum Vergleichen einer Photodetektoranordnung nach Anspruch 1 oder 2 in Abhängigkeit von Umweltparameter, insbesondere Temperatur, während des Messbetriebs, mit den folgenden Schritten:

   Messen des Spannungssignals ($U_{a0\delta 1}$) am Ausgang des Verstärkers (TIV) bei Leerlauf nach Umschalten des Schalters (S) auf den Leerlaufanschluss (1),
   Messen des Spannungssignals $U_{a0\delta 3}$ am Ausgang des Verstärkers (TIV) nach Umschalten des Schalters S auf den Hilfswiderstand ($R_H$), Berechnen der dem Dunkelstrom entsprechenden Ausgangsspannung $U_{A0\delta}$ am Ausgang des Verstärkers (TIV) unter Berücksichtigung von der augenblicklichen Temperatur ($\delta$) entsprechen-

den abgespeicherten Widerstandwerten ($R_{D\delta}$) des opto-elektrischen Wandlers (D) mittels der Signalverarbeitungseinrichtung ($\mu$P) und

Ermitteln des Spannungspegels (UA) des opto-elektrischen Wandlers (D) bei Messbetrieb nach Umschalten auf den opto-elektrischen Wandler (D) und Korrigieren mit dem Dunkeistrom-Spannungssignal ($U_{a0\delta}$) am Ausgang des Verstärkers (TIV) bei der augenblicklichen Temperatur ($\delta$).

4.  Verfahren nach Anspruch 3, **dadurch gekennzeichnet, dass** der Innenwiderstand ($R_D$) des opto-elektrischen Wandlers (D) einmalig für die Photodetelctoranordnung vor der Durchführung von Messungen bei einer bestimmten Temperatur ermittelt und in dem Speicher (SP) abgespeichert wird.

5.  Verfahren nach Anspruch 4, **dadurch gekennzeichnet, dass** der der jeweiligen Temperatur ($\delta$) entsprechende Innenwiderstand ($R_{D\delta}$) entsprechend des verwendeten opto-elektrischen Wandlers (D) und der jeweiligen Temperatur auf der Basis des Innenwiderstandes ($R_D$) des opto-elektrischen Wandlers (D) in der Signalverarbeitungseinrichtung ($\mu$P) berechnet wird.

6.  Verfahren nach Anspruch 4, **dadurch gekennzeichnet, dass** der Innenwiderstand ($R_D$) bei einer bestimmen Temperatur ($\delta$) ohne Photodetektion durch Messen des Spannungssignals ($U_{a0i}$) mit i = Stellung des Schalters am Ausgang des Verstärkers (TIV) nach Umschalten des Schalters S auf die Stellung Leerlauf (i=1), auf die Stellung optoelektronischer Wandler (i=2) und auf die Stellung Hilfswiderstand (i=3) und Berechnen aus den Messergebnissen ermittelt wird.

7.  Verfahren nach Anspruch 3, **dadurch gekennzeichnet, dass** im Messbetrieb der Schalter (S) zur Ermittlung des temperaturabhängigen Dunkelstromkorrekturwertes ($U_{a0\delta}$) kurzzeitig durch die Signalverarbeitungseinrichtung ($\mu$P) umgeschaltet wird.

**Claims**

1.  Photoelectric detector arrangement for measuring optical performances, said arrangement having

    - an optoelectric converter (D) for receiving an optical signal and issuing an electrical signal,
    - an amplifier (TIV) for amplifying the signal, received from the optoelectric converter (D), and generating an electrical voltage signal,
    - an A/D converter (AD) downstream of the amplifier (TIV), a signal processing apparatus ($\mu$P) having a storage apparatus (SP) which receives and subsequently processes the digital signals from the AID converter, and
    - a temperature sensor (T) in conjunction with the signal processing apparatus ($\mu$P),

    **characterised by** a switching apparatus (S) between the optoelectric converter (D) and amplifier (TIV) for switching-over the amplifier (TIV) either to an auxiliary resistance ($R_H$), to the optoelectric converter (D) or to a no-load connection (1).

2.  Photoelectric detector arrangement according to claim 1, **characterised in that** the switching apparatus (S) is an electronic switching apparatus, which is connected to the signal processing apparatus (uP).

3.  Method of comparing a photoelectric detector arrangement according to claim 1 or 2 in dependence on environmental parameters, more especially temperature, during the measurement operation, said method having the following steps:

    - measuring the voltage signal ($U_{a0\delta1}$) at the output of the amplifier (TIV) during the no-load state after switching-over the switch (S) to the no-load connection (1),
    - measuring the voltage signal ($U_{a0\delta3}$) at the output of the amplifier (TIV) after switching-over the switch (S) to the auxiliary resistance ($R_H$), calculating the output voltage ($U_{A0\delta}$), corresponding to the dark current, at the output of the amplifier (TIV) whilst taking account of stored resistance values ($R_{D\delta}$), corresponding to the instantaneous temperature (5), of the optoelectric converter (D) by means of the signal processing apparatus ($\mu$P), and
    - determining the voltage level (UA) of the optoelectric converter (D) during the measuring operation after switching-over to the optoelectric converter (D) and correcting with the dark-current voltage signal ($U_{a0\delta}$) at the output of the amplifier (TIV) at the instantaneous temperature ($\delta$).

4. Method according to claim 3, **characterised in that** the internal resistance ($R_D$) of the optoelectric converter (D) is determined once for the photoelectric detector arrangement, prior to carrying out measurements at a specific temperature, and is stored in the storage unit (SP).

5. Method according to claim 4, **characterised in that** the internal resistance ($R_{D\delta}$), corresponding to the respective temperature ($\delta$), is calculated in the signal processing apparatus ($\mu$P) according to the optoelectric converter (D) used and the respective temperature on the basis of the internal resistance ($R_D$) of the optoelectric converter (D).

6. Method according to claim 4, **characterised in that** the internal resistance ($R_D$) is determined at a specific temperature ($\delta$) without photoelectric detection by measuring the voltage signal ($U_{a0i}$), with i = the position of the switch at the output of the amplifier (TIV) after switching-over the switch (S) to the no-load position (i=1), to the position of the optoelectric converter (i=2) and to the position of the auxiliary resistance (i=3), and by effecting a calculation from the measurement results.

7. Method according to claim 3, **characterised in that**, in the measuring operation, the switch (S) for determining the temperature-dependent dark-current correction value ($U_{a0\delta}$) is temporarily switched-over by the signal processing apparatus ($\mu$P).

**Revendications**

1. Dispositif photodétecteur pour la mesure de puissances optiques comprenant
   un convertisseur opto-électrique (D) pour recevoir ou recueillir un signal optique et délivrer un signal électrique,
   un amplificateur (TIV) pour amplifier le signal reçu du convertisseur opto-électrique (D) et générer un signal de tension électrique,
   un convertisseur A/N (AD) après l'amplificateur (TIV), un dispositif de traitement de signaux ($\mu$P) avec un dispositif de mémoire (SP) qui reçoit et traite les signaux numériques du convertisseur A/N, ainsi que
   un capteur de température (T) relié au dispositif de traitement de signaux ($\mu$P),
   **caractérisé par**
   un dispositif de commutation (S) entre le convertisseur opto-électrique (D) et l'amplificateur (TIV) pour commuter l'amplificateur (TIV) soit sur une résistance auxiliaire ($R_H$), soit sur le convertisseur opto-électrique (D) ou soit sur une connexion en circuit ouvert (1).

2. Dispositif photodétecteur selon la revendication 1, **caractérisé par le fait que** le dispositif de commutation (S) est un dispositif de commutation électronique qui est relié au dispositif de traitement de signaux ($\mu$P).

3. Procédé pour ajuster un dispositif photodétecteur selon la revendication 1 ou 2 en fonction de paramètres d'environnement, en particulier la température, pendant la mesure, présentant les étapes suivantes :

   mesure du signal de tension ($U_{a0\delta1}$) à la sortie de l'amplificateur (TIV) en circuit ouvert après commutation du commutateur (S) sur la connexion en circuit ouvert (1),
   mesure du signal de tension ($U_{a0\delta3}$) à la sortie de l'amplificateur (TIV) après commutation du commutateur (S) sur la résistance auxiliaire ($R_H$), calcul de la tension de sortie $U_{A0\delta}$ correspondant au courant d'obscurité à la sortie de l'amplificateur (TIV) en tenant compte de valeurs de résistance ($R_{D\delta}$) mémorisées du convertisseur opto-électrique (D) correspondant à la température actuelle ($\delta$) au moyen du dispositif de traitement de signaux ($\mu$P) et
   détermination du niveau de tension (UA) du convertisseur opto-électrique (D) lors de la mesure après commutation sur le convertisseur opto-électrique (D) et correction par le signal de tension de courant d'obscurité ($U_{a0\delta}$) à la sortie de l'amplificateur (TIV) à la température actuelle ($\delta$).

4. Procédé selon la revendication 3, **caractérisé par le fait que** la résistance interne ($R_D$) du convertisseur opto-électrique (D) est déterminée une seule fois pour le dispositif photodétecteur à une certaine température avant la réalisation de mesures et mémorisée dans la mémoire (SP).

5. Procédé selon la revendication 4, **caractérisé par le fait que** la résistance interne ($R_{D\delta}$) correspondant à la température ($\delta$) respective, correspondant au convertisseur opto-électrique (D) utilisé, et à cette température respective, correspondant sur la base de la résistance interne ($R_D$) du convertisseur opto-électrique (D), est calculée dans le dispositif de traitement de signaux ($\mu$P).

**6.** Procédé selon la revendication 4, **caractérisé par le fait que** la résistance interne ($R_D$) est déterminée à une certaine température ($\delta$) sans photodétection par mesure du signal de tension ($U_{a0i}$) avec i = position du commutateur à la sortie de l'amplificateur (TIV) après commutation du commutateur (S) sur la position circuit ouvert (i = 1), sur la position convertisseur opto-électrique (i = 2) et sur la position résistance auxiliaire (i = 3) et calcul à partir des résultats de mesure.

**7.** Procédé selon la revendication 3, **caractérisé par le fait que**, pendant la mesure, le commutateur (S) est brièvement commuté par le dispositif de traitement de signaux ($\mu$P) pour déterminer la valeur de correction du courant d'obscurité ($U_{a0\delta}$) variable avec la température.